# EUROPEAN PATENT APPLICATION

(11) **EP 3 496 486 A1**
(43) Date of publication of application: **12.06.2019**
(21) Application number: 17837050.8
(22) Date of filing: 03.08.2017
(51) Int. Cl.: H04W 72/04, H04W 28/06

(54) **USER TERMINAL AND WIRELESS COMMUNICATION METHOD**

(30) Priority: 04.08.2016 JP 2016154019
(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); LIU, Liu, Beijing 100190 (CN); JIANG, Huiling, Beijing 100190 (CN); LI, Can, Beijing 100876 (CN); LI, Yong, Beijing 100876 (CN); WANG, Wenbo, Beijing 100876 (CN)
(74) Representative: Hoffmann Eitle
(86) International application number: PCT/JP2017/028163
(87) International publication number: WO 2018/025949

(57) **Abstract**

The present invention is designed to properly transmit demodulation reference signals for UL data channels in short TTIs. A user terminal according to one aspect of the present invention has a transmission section that transmits a demodulation reference signal for an uplink (UL) data channel, and a control section that controls the transmission of the demodulation reference signal, and, when the UL data channel is transmitted in a second transmission time interval (TTI), which is comprised of a smaller number of symbols than a first TTI, the control section maps the demodulation reference signal to a symbol that is selected based on the arrangement pattern of the second TTI.

## Description

### Technical Field

The present invention relates to a user terminal and a radio communication method in next-generation mobile communication systems.

### Background Art

In the UMTS (Universal Mobile Telecommunications System) network, the specifications of long-term evolution (LTE) have been drafted for the purpose of further increasing high speed data rates, providing lower latency and so on (see non-patent literature 1). In addition, successor systems of LTE are also under study for the purpose of achieving further broadbandization and increased speed beyond LTE (referred to as, for example, "LTE-A (LTE-Advanced)," "FRA (Future Radio Access)," "4G," "5G," "5G+ (plus)," "NR (New RAT)," "LTE Rel. 14," "LTE Rel. 15 (or later versions)," and so on).

In existing LTE systems (for example, LTE Rel. 10 and later versions), carrier aggregation (CA) to integrate multiple carriers (component carriers (CCs), cells, etc.) is introduced in order to achieve broadbandization. Each carrier is formed with the system band of LTE Rel. 8 as one unit. In addition, in CA, multiple CCs under the same radio base station (eNB (eNodeB)) are configured in a user terminal (UE (User Equipment)).

Meanwhile, in existing LTE systems (for example, LTE Rel. 12 and later versions), dual connectivity (DC), in which multiple cell groups (CGs) formed by different radio base stations are configured in a user terminal, is introduced. Each cell group is comprised of at least one cell (CC, cell, etc.). In DC, multiple CCs of different radio base stations are integrated, so that DC is also referred to as "inter-eNB CA."

In existing LTE systems (for example, LTE Rel. 8 to 13), downlink (DL) communication and/or uplink (UL) communication are performed using 1-ms transmission time intervals (TTIs) (also referred to as "subframes" or the like). This 1-ms TTI is the unit of time it takes to transmit one channel-encoded data packet, and is the processing unit in, for example, scheduling, link adaptation, retransmission control (HARQ (Hybrid Automatic Repeat reQuest)) and so on.

### Citation List

### Non-Patent Literature

Non-Patent Literature 1: 3GPP TS 36.300 Rel. 8 "Evolved Universal Terrestrial Radio Access (E-UTRA) and Evolved Universal Terrestrial Radio Access Network (E-UTRAN); Overall description; Stage 2"

### Summary of Invention

### Technical Problem

Envisaging future radio communication systems (for example, LTE Rel. 14, LTE Rel. 15, 5G, NR, and so on), studies are underway to support TTIs (hereinafter also referred to as "short TTIs") that are shorter in time than the 1-ms TTIs (hereinafter also referred to as "normal TTIs") of existing LTE systems, in order to reduce latency (latency reduction).

When transmitting a UL data channel (also referred to as "PUSCH (Physical Uplink Shared Channel)," "UL Shared Channel," or "short PUSCH (s PUSCH)," and so on) in short TTIs, how to place the demodulation reference signal (DM-RS (DeModulation Reference Signal)) for use for demodulate this UL data channel is the problem.

The present invention has been made in view of the above, and it is therefore an object of the present invention to provide a user terminal and a radio communication method that are capable of properly transmitting demodulation reference signals for UL data channels, in short TTIs.

### Solution to Problem

A user terminal according to one aspect of the present invention has a transmission section that transmits a demodulation reference signal for an uplink (UL) data channel, and a control section that controls the transmission of the demodulation reference signal, and, when the UL data channel is transmitted in a second transmission time interval (TTI), which is comprised of a smaller number of symbols than a first TTI, the control section maps the demodulation reference signal to a symbol that is selected based on the arrangement pattern of the second TTI.

### Advantageous Effects of Invention

According to the present invention, demodulation reference signals for UL data channels can be transmitted properly in short TTIs.

### Brief Description of Drawings

FIG. 1 is a diagram to illustrate a state in which a user terminal to use short TTIs and a user terminal to use normal TTIs are multiplexed;
FIG. 2 is a diagram to illustrate an arrangement pattern, in which short TTIs of two symbols are placed in a normal TTI (one subframe), and an arrangement pattern, in which short TTIs of two/three symbols are placed;
FIG. 3 is a diagram to illustrate a plurality of arrangement patterns, in which short TTIs of two symbols are placed in a normal TTI;
FIG. 4 is a diagram to illustrate an arrangement pattern, in which short TTIs of two symbols are placed in a normal TTI (one subframe) and an arrangement pattern, in which short TTIs of two/three symbols are placed;
FIG. 5 is a diagram to illustrate a plurality of arrangement patterns, in which short TTIs of two symbols are placed in normal TTIs;
FIG. 6 is a diagram to illustrate an arrangement pattern for short TTIs of two symbols when OFDMA is applied to the UL;
FIG. 7 is a diagram to illustrate an arrangement pattern for short TTIs of two symbols when OFDMA is applied to the UL;
FIG. 8 is a diagram to illustrate an arrangement pattern, in which short TTIs of three/four symbols are placed in a normal TTI;
FIG. 9 is a diagram to illustrate an arrangement pattern for sharing demodulation reference signals in a number of two-symbol short TTIs;
FIG. 10 is a diagram to illustrate an arrangement pattern for sharing demodulation reference signals in a number of two-symbol short TTIs;
FIG. 11 is a diagram to illustrate an arrangement pattern for sharing demodulation reference signals in a number of two-symbol/three-symbol short TTIs;
FIG. 12 is a diagram to illustrate an arrangement pattern for sharing demodulation reference signals in a number of two-symbol/three-symbol short TTIs;
FIG. 13 is a diagram to explain how to determine the arrangement pattern of UL short TTIs;
FIG. 14 is a diagram to explain how to determine the arrangement pattern of UL short TTIs;
FIG. 15 is a diagram to explain how to determine the arrangement pattern of UL short TTIs;
FIG. 16 is a diagram to illustrate an example of a schematic structure of a radio communication system according to the present embodiment;
FIG. 17 is a diagram to illustrate an example of an overall structure of a radio base station according to the present embodiment;
FIG. 18 is a diagram to illustrate an example of a functional structure of a radio base station according to the present embodiment;
FIG. 19 is a diagram to illustrate an example of an overall structure of a user terminal according to the present embodiment;
FIG. 20 is a diagram to illustrate an example of a functional structure of a user terminal according to the present embodiment; and
FIG. 21 is a diagram to illustrate an example hardware structure of a radio base station and a user terminal according to the present embodiment.

### Description of Embodiments

In existing LTE systems, the user terminal performs DL and/or UL communication using normal TTIs. A normal TTI has a time duration of 1 ms. A normal TTI is also referred to as a "TTI," a "subframe," a "long TTI," a "normal subframe," a "long subframe," a "legacy TTI" and so on, and is comprised of two slots. A cyclic prefix (CP) is appended to each symbol in normal TTIs.

Also, in existing LTE systems, when a normal CP (for example, 4.76 µs) is appended to every symbol, a normal TTI is comprised of fourteen symbols (seven symbols per slot). Also, in the event an enhanced CP (for example, 16.67 µs), which is longer than a normal CP, is appended to every symbol, a normal TTI is comprised of twelve symbols (six symbols per slot). In addition, the time duration (symbol duration) of each symbol is 66.7 µs, and the subcarrier spacing is 15 kHz. Note that the symbol duration and the subcarrier spacing are reciprocal to each other.

Meanwhile, future radio communication systems (for example, LTE Rel. 14 or 15, 5G, NR and so on) are anticipated to accommodate a variety of services such as high-speed and large-capacity communication (eMBB (enhanced Mobile Broad Band)), massive access (mMTC (massive MTC)) from devices (user terminals) for inter-device (M2M (Machine-to-Machine)) communication such as IoT (Internet of Things) and MTC (Machine Type Communication), and low-latency, reliable communication (URLLC (Ultra-Reliable and Low Latency Communication)), in a single framework. URLLC is required to provide a higher latency-reducing effect than eMBB and mMTC.

Therefore, for future radio communication systems, research is underway to support TTIs having different time durations than the normal TTIs of existing LTE systems. For example, research is underway to support a short TTI, which is shorter than a normal TTI, for latency reduction. This short TTI is also referred to as a "short subframe," a "short TTI," an "sTTI," and so on.

For example, regarding frequency division duplex (FDD) (also referred to as "FS (Frame Structure) type 1" and/or the like), a study is in progress to support, in the DL, a short TTI consisting of two symbols and/or a short TTI consisting of one slot. Similarly, a study is in progress to support, in the UL, at least one of a short TTI consisting of two symbols, a short TTI consisting of four symbols, and a short TTI consisting of one slot (which is seven symbols or six symbols).

Furthermore, in relationship to time division duplex (TDD) (also referred to as "FS type 2" and so on), research is underway to support, in the DL and in the UL, a short TTI consisting of one slot in LTE Rel. 14, and a short TTI consisting of fewer symbols than one slot in LTE Rel. 15 and later versions.

To provide support for short TTIs in UL of future radio communication systems, how to place the demodulation reference signal (DM-RS) for a UL data channel (hereinafter referred to as "PUSCH") is the problem. When a PUSCH is transmitted in a normal TTI in an existing LTE system, the DM-RS is placed in one symbol per slot (in the fourth symbol when a normal CP is used, in the third symbol when an enhanced CP is used, and so on). Therefore, when a PUSCH is transmitted in a short TTI of one slot, the arrangement of DM-RSs used in existing LTE systems can be reused on an as-is basis.

However, when a PUSCH is transmitted in a short TTI that is comprised of fewer symbols than one slot (which is, for example, two, three or four symbols) and the arrangement of DM-RSs used in existing LTE systems is reused on an as-is basis, there is a possibility that DM-RSs are not placed properly in each short TTI, and the PUSCH cannot be demodulated properly.

So, the present inventors have worked on the method of properly placing the DM-RS for a PUSCH that is transmitted in short TTIs that are comprised of fewer symbols than one slot, and arrived at the present invention.

Now, the present embodiment will be described below in detail. In the present embodiment, the same symbol duration is applied between normal TTIs and short TTIs, but different symbol durations can be used as well. In addition, a CP of a predetermined time duration may or may not be attached to at least one symbol in a short TTI.

Also, although the following description will assume that normal TTIs and short TTIs coexist in the same carrier (cell, component carrier, etc.), this is by no means limiting. The present embodiment can be applied to the case where only short TTIs are used within the same carrier.

In the following description, the PUSCH that is allocated to short TTIs (sTTIs) will be referred to as the "short PUSCH (sPUSCH)," for distinction from the PUSCH that is allocated to normal TTIs. Furthermore, the PUCCH that is allocated to short TTIs will be referred to as the "short PUCCH (sPUCCH)," for distinction from the PUCCH that is allocated to normal TTIs.

### (First Aspect)

In accordance with a first aspect of the present invention, a case will be described below where a DM-RS is not to be shared between short TTIs that consist of fewer symbols than one slot. Hereinafter, a short TTI that is comprised of two or three symbols (two/three symbols) and a short TTI that is comprised of three or four symbols (three/four symbols) will be described.

### <Two/three Symbols>

If a DM-RS is not to be shared between short TTIs and a two-symbol short TTI is used, this short TTI may be configured not to cross the slot boundary in a normal TTI (when SC-FDMA (Single Carrier-Frequency Division Multiple Access) is used), or may be configured to cross the slot boundary in a normal TTI (when OFDMA (Orthogonal Frequency Division Multiple Access) is used).

### «Case of SC-FDMA»

SC-FDMA is used in the UL of existing LTE systems, and transmission signals are generated based on DFT-S-OFDM (Discrete Fourier Transform-Spread-Orthogonal Frequency Division Multiplexing). When transmission signals are generated based on DFT-S-OFDM, in a given symbol, either a PUSCH or a DM-RS is placed, over the whole frequency bandwidth allocated to the PUSCH. That is, a PUSCH and a DM-RS cannot be frequency-division-multiplexed within the frequency bandwidth allocated to the PUSCH in a given symbol.

Therefore, when a DM-RS is not to be shared between short TTIs and a two-symbol short TTI is used, a PUSCH is transmitted in one symbol, and a DM-RS is transmitted in the other symbol. In this case, frequency hopping cannot be applied within the short TTI.

Meanwhile, there is a possibility that a user terminal to use a short TTI of two symbols, to which frequency hopping cannot be applied, as described above, and a user terminal to use a TTI, to which frequency hopping can be applied (for example, a normal TTI), are multiplexed in the same carrier (cell, CC, etc.).

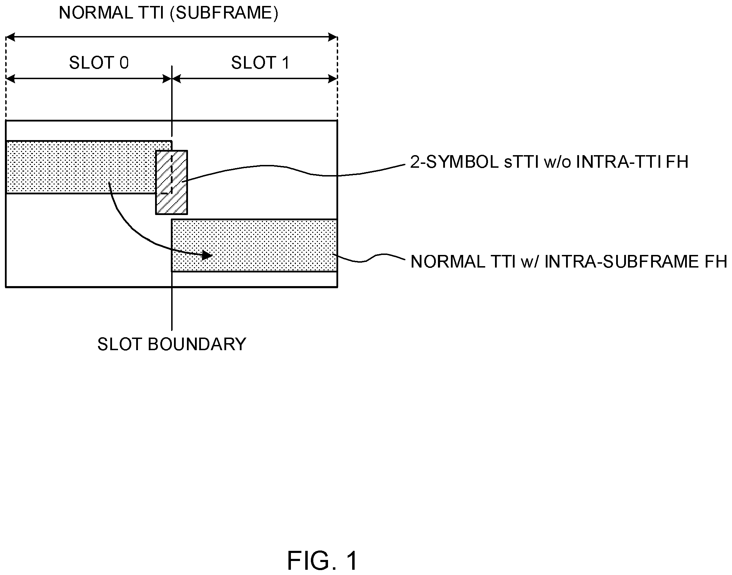

FIG. 1 is a diagram to illustrate an example of multiplexing user terminals in the same carrier. In FIG. 1, a user terminal to use short TTIs of two symbols and a user terminal to use normal TTIs are multiplexed. Referring to FIG. 1, frequency hopping is applied to the PUSCH for the user terminal using normal TTIs, between slots in a normal TTI.

On the other hand, if, as mentioned earlier, a DM-RS is not to be shared between short TTIs and a two-symbol short TTI is used, frequency hopping cannot be applied between symbols within this short TTI. Therefore, when, as illustrated in FIG. 1, a short TTI, to which frequency hopping is not applied, crosses the slot boundary in a normal TTI where frequency hopping is applied, the PUSCH mapping field of this short TTI might collide with the PUSCH mapping field of the normal TTI. Also, trying to prevent this collision might simply result in making the scheduling control in the radio base station even more complicated.

Therefore, when a DM-RS is not to be shared between short TTIs and a two-symbol short TTI is used, this short TTI is configured not to cross the slot boundary in a normal TTI.

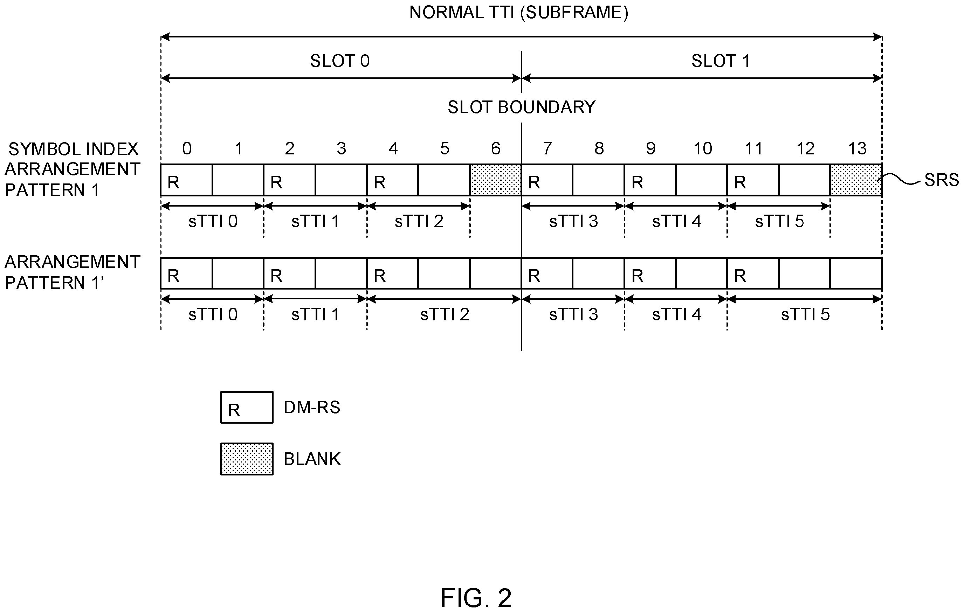

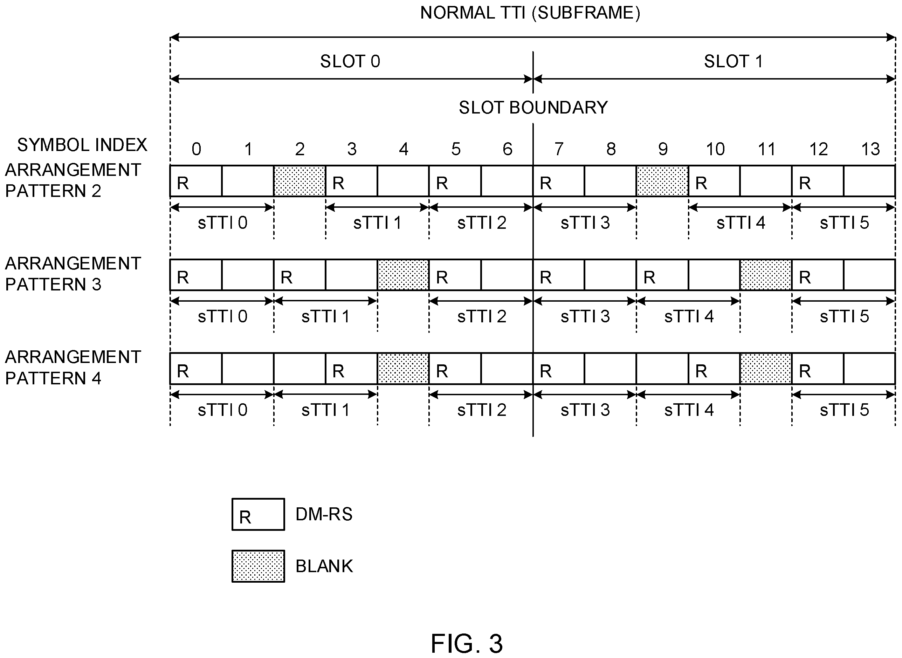

Now, with reference to FIG. 2 and FIG. 3, examples of arrangements of short TTIs when SC-FDMA is applied (in other words, arrangement patterns, in which short TTIs are placed not to cross the slot boundary in a normal TTI) will be described.

In arrangement pattern 1 illustrated in FIG. 2, three short TTIs of two symbols are placed in each of two slots of a normal TTI. Short TTI 0 to short TTI 2 are placed over symbol indices 0 to 5 contained in the first slot (slot 0) of the normal TTI. Short TTIs 3 to 5 are placed over symbol indices 7 to 12 contained in the second slot (slot 1) of the normal TTI. Short TTIs 0 to 5 are each comprised of two symbols, and a DM-RS is allocated to the first symbol in each. In other words, DM-RSs are mapped to symbols that are selected based on the pattern arrangement.

Symbol indices 6 and 13 are configured blank. Note that symbols that are designated to be blank may be configured to transmit SRSs. For example, an SRS may be allocated to symbol index 13, which corresponds to the final symbol of the normal TTI.

Note that, although a DM-RS is allocated to the first symbol of every short TTI, it is equally possible to allocate DM-RSs to other symbols as well (for example, to the second symbol, or to the third symbol if three-symbol short TTIs are used). However, considering that the data demodulation process is to be executed as quickly as possible in the radio base station, it is preferable to allocate DM-RSs, which serve as reference signals upon demodulating data, to the first symbol in short TTIs.

According to the configuration described above, demodulation reference signals (DM-RSs) for use for demodulating UL data channels can be transmitted properly in short TTIs.

In arrangement pattern 1' illustrated in FIG. 2, short TTI 2 and short TTI 5 in above-described arrangement pattern 1 are formed with three symbols. In short TTI 2, it is possible to allocate UL data to the third symbol (symbol index 6). In short TTI 5, data can be allocated to the third symbol (symbol index 13). However, an SRS may be allocated to the symbol of symbol index 13.

According to the above configuration, the same effect as arrangement pattern 1 can be achieved, and, furthermore, compared to this configuration, many resources (symbols) can be reserved for transmitting data, so that efficient UL transmission can be realized.

FIG. 3 illustrates an example in which blank symbols is placed in locations that are different from the locations of blank symbols indicated in arrangement pattern 1. In arrangement pattern 2 illustrated in the same drawing, the symbols of symbol indices 2 and 9 are configured blank. Therefore, the locations of short TTIs 1, 2, 4 and 5 shift backward by one symbol, in comparison to arrangement pattern 1. In arrangement patterns 3 and 4, the symbols of symbol indices 4 and 11 are configured blank. Therefore, the locations of short TTIs 2 and 5 shift backward by one symbol, in comparison to arrangement pattern 1.

According to the above configuration, similar to arrangement pattern 1, demodulation reference signals (DM-RSs) for use for demodulating UL data channels can be properly transmitted in short TTIs. Note that, in arrangement pattern 2, DM-RSs are allocated to symbol indices 3 and 10. In a normal TTI, DM-RSs are allocated to the fourth symbol of every slot, so that existing DM-RSs can be used when the configuration of arrangement pattern 2 is used, and, even when normal TTIs are scheduled in neighboring cells and/or other places, the symbols of DM-RSs still match, so that inter-cell interference can be randomized.

In short TTIs 1 and 4 of arrangement pattern 4, transmission data is allocated to the first symbol, and a DM-RS is allocated to the second symbol. By this means, existing DM-RSs can be used as in above-described arrangement pattern 2, and, even when normal TTIs are scheduled in neighboring cells and/or other places, the symbols of DM-RSs still match, so that inter-cell interference can be randomized.

Also, in each of arrangement patterns 2 to 4, symbols that are configured blank (blank symbols) may be configured to be used to transmit uplink data (by forming short TTIs with three symbols), as in arrangement pattern 1'.

Next, variations of the above-described configurations will be described below. One of the arrangements of blank symbols indicated as arrangement patterns 1 to 4 above may be configured to be shared in common by a number of user terminals that use two-symbol short TTIs, and the blank symbols configured thus may always be blank. In other words, an arrangement pattern may be shared in common by a number of user terminals. In this case, the locations of DM-RS symbols always match between users, so that, for example, it is easy to randomize interference between neighboring cells, make DM-RSs orthogonal to each other when multi-user MIMO multiplexing is applied to a number of user terminals that communicate with the same base station, and so forth.

By contrast with this, different blank symbol locations may be configured between different user terminals (blank symbol locations may be configured on a per user terminal basis). For example, blank symbols may be configured based on arrangement pattern 1 for the first user terminal, and blank symbols may be configured based on arrangement pattern 2 for a second user terminal. In other words, the above-described arrangement patterns may be applied on a per user terminal basis. By using this configuration, appropriate short TTIs may be configured depending on in what environment user terminals communicate, and DM-RSs are transmitted in these short TTIs. Also, from the perspective of the system, it is possible to reduce blank resources and improve the efficiency of the use of resources.

Also, in one user terminal, the locations of blank symbols may be configured dynamically. For example, depending on in what environment a user terminal communicates, one of the arrangements of blank symbols that have been illustrated above as arrangement patterns 1 to 4 may be configured. In other words, for a given user terminal, arrangement patterns may be configured dynamically depending on the communicating environment. This dynamic configuration can be realized using RRC signaling and/or the like. By using this configuration, appropriate short TTIs may be configured depending on in what environment user terminals communicate, and DM-RSs are transmitted in these short TTIs. Also, from the perspective of the system, it is possible to reduce blank resources and improve the efficiency of the use of resources.

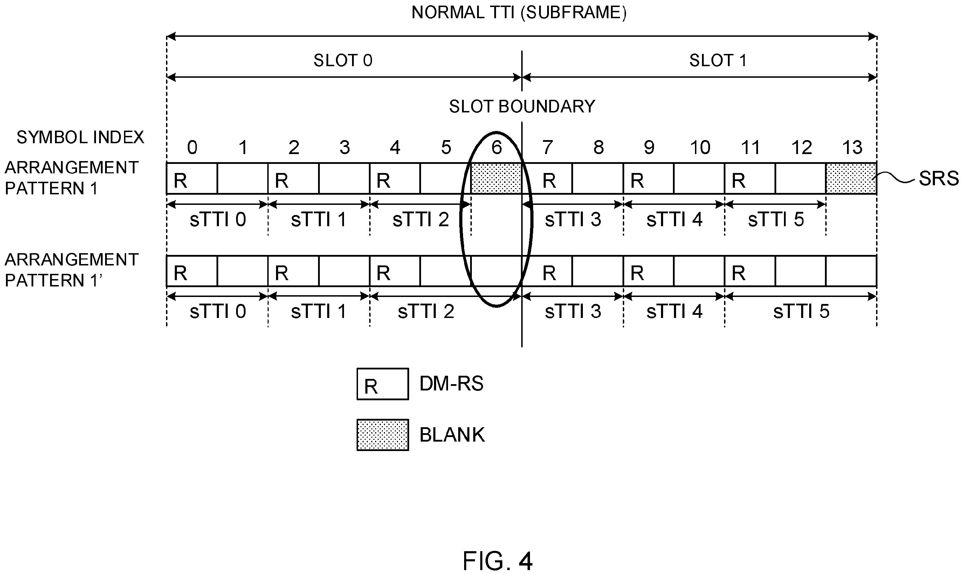

Also, if a short TTI to neighbor a blank symbol (for example, precede a blank symbol in time) is scheduled for a user terminal, this blank symbol may be used to map a transport block (TB) (see FIG. 4). For example, if short TTIs are configured in multiple user terminals in accordance with arrangement pattern 1, a user terminal where short TTI 2 is scheduled may map a TB (that is, transmit data) by using blank symbol 6 (arrangement pattern 1').

By using this configuration, the number of data symbols that are effective for transmitting uplink data increases. Also, user terminals can change the size of TBs depending on the number of effective data symbols (one or two in FIG. 4).

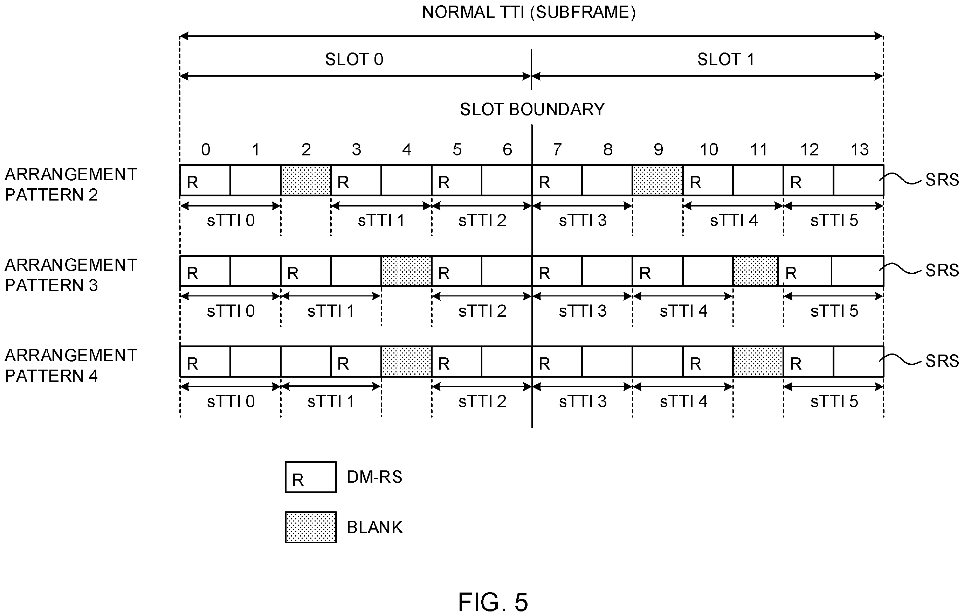

Also, in the event a short PUSCH and/or a short PUCCH (PUSCH and/or PUCCH for use with sTTIs) are transmitted in the last short TTI of a normal TTI (one subframe), the transmission of the short PUSCH and/or the short PUCCH might collide with an SRS that is transmitted in the last symbol of the normal TTI. In this case, the user terminal where the above last short TTI is scheduled may transmit the short PUSCH, without transmitting the SRS (that is, by dropping the SRS), in the above colliding last symbol (see FIG. 5). Also, if a short PUCCH is to be transmitted in the last short TTI, the above user terminal may drop the SRS and transmit the short PUCCH in the last short TTI, regardless of whether or not the parameter to indicate multiplex (simultaneous) transmission of a PUCCH and an SRS (simultaneous-AN-and-SRS) is "TRUE."

According to this configuration, transmission of short PUSCHs or short PUCCHs is prioritized, so that efficient UL transmission can be realized, and the degradation of DL throughput can be reduced.

### «Case of OFDMA»

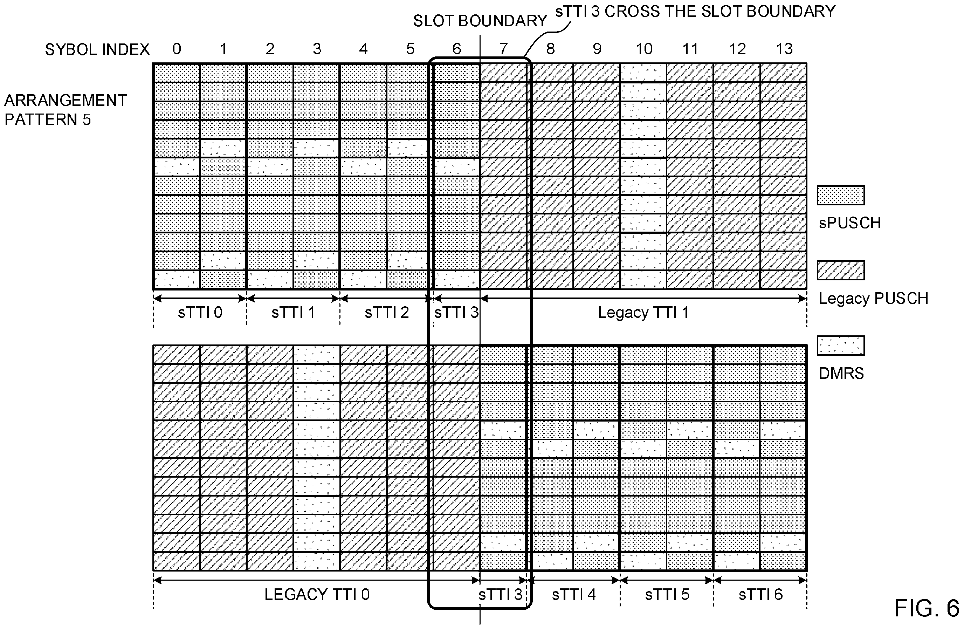

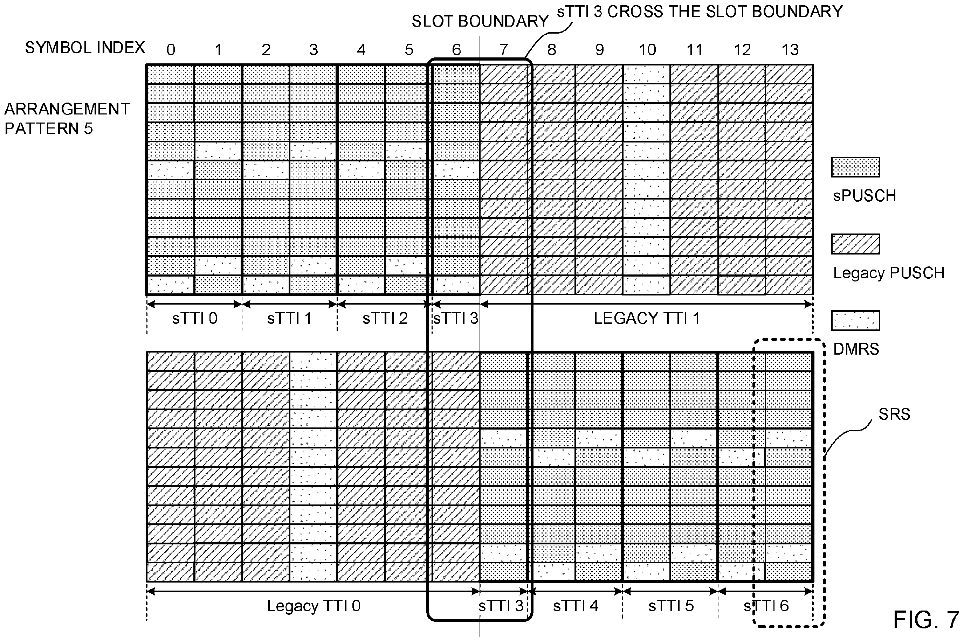

Next, a case where OFDMA is applied to uplink transmission will be described below with reference to FIG. 6 and FIG. 7. As described above, while SC-FDMA is used in the UL of existing LTE, from now on, there is a possibility that OFDMA will be used to generate UL signals as in the DL of existing LTE. Below, transmission of SRSs in that case will be described.

FIG. 6 illustrates an example of arrangement of two-symbol short TTIs when OFDMA is applied to the UL. In this drawing, frequency hopping is applied between the slots of a normal TTI. Short TTIs 0 to 2 and short TTIs 4 to 6 can be arranged based on, for example, arrangement pattern 1, but it is equally possible to apply frequency hopping in each short TTI. Therefore, as illustrated in FIG. 6, a short PUSCH and a DM-RS are multiplexed within the same symbol index.

By using this configuration, unlike short TTIs of two symbols that are used when SC-FDMA is applied, there is no need to provide blank resources (blank symbols). Consequently, radio resources can be used efficiently.

Referring to the configuration illustrated in FIG. 6, when a short PUSCH and/or a short PUCCH (PUSCH and/or PUCCH for use with sTTIs) are transmitted in the last short TTI of the normal TTI (one subframe), the transmission of the short PUSCH and/or the short PUCCH might collide with an SRS that is transmitted in the last symbol of the normal TTI (FIG. 7). In this case, the user terminal where the last short TTI (sTTI 6) is scheduled may transmit the short PUSCH only in the first symbol (symbol index 12) and transmit the SRS in the second symbol.

Also, if a short PUCCH is to be transmitted in the last short TTI, the above user terminal may drop the SRS and transmit the short PUCCH in the last short TTI (both symbols of sTTI 6), only if the parameter to indicate multiplex (simultaneous) transmission of a PUCCH and an SRS (simultaneous-AN-and-SRS) is "FALSE." If the parameter is not FALSE, the user terminal may transmit the short PUCCH only in the first symbol (symbol index 12) and transmit the SRS in the second symbol.

By using this configuration, user terminals can transmit SRSs, short PUSCHs and short PUCCHs properly.

### <Three/four symbols>

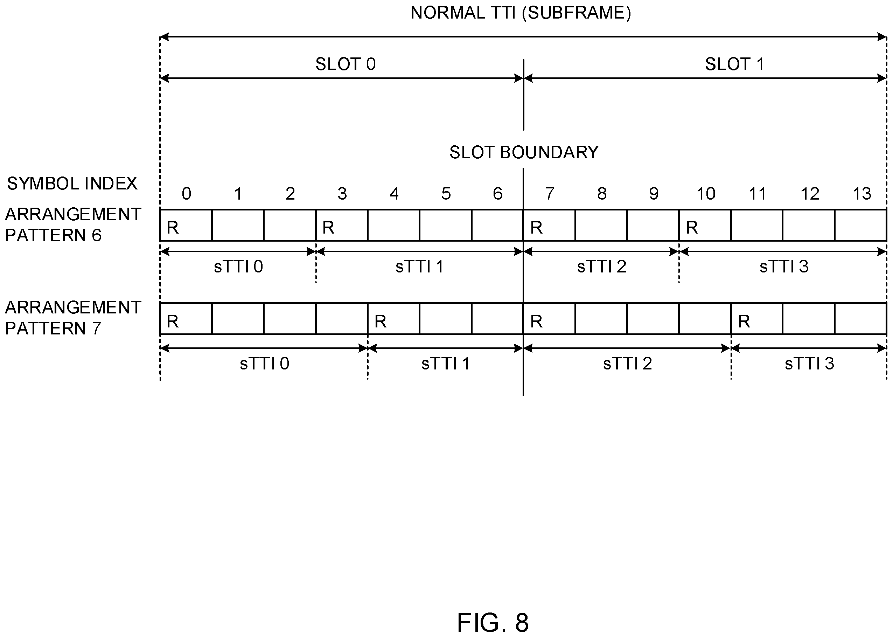

Next, a case of placing short TTIs of three/four symbols will be described below. As illustrated in FIG. 8, by using short TTIs comprised of three symbols and short TTIs comprised of four symbols, short TTI are placed without crossing slot boundaries.

In arrangement pattern 6 of FIG. 8, short TTIs 0 and 2 are comprised of three symbols, and short TTIs 1 and 3 are comprised of four symbols. Also, in arrangement pattern 7, short TTIs 0 and 2 are comprised of four symbols, and short TTIs 1 and 3 are comprised of three symbols. By using this configuration, unlike the short TTIs of two symbols for use when SC-FDMA is applied, there is no need to provide blank resources (blank symbols). This makes it possible to use radio resources efficiently.

### (Second Aspect)

In accordance with a second aspect of the present invention, a case will be described below where a symbol can be shared by a number of short TTIs, and the DM-RSs for the PUSCHs of these multiple short TTIs can be multiplexed on this symbol (hereinafter referred to as a "shared symbol"). In the following description, short TTIs comprised of two or three symbols (two/three symbols) and short TTIs comprised of three or four symbols (three/four symbols) will be described.

Note that, in the second aspect, SC-FDMA and DFT-s-OFDM may be used as UL access schemes, or OFDMA may be used. When using SC-FDMA and/or DFT-s-OFDM, the DM-RSs of multiple short TTIs may be multiplexed upon a shared symbol by applying cyclic shifts (CSs) and/or by arranging subcarriers in a comb-tooth shape (comb). In the case of using OFDMA, DM-RSs of a number of short TTIs may be multiplexed by frequency division multiplexing and/or code division multiplexing (for example, CS and/or OCC (Orthogonal Cover Code) etc.) in DM-RS symbols.

### <Two Symbols>

When using two-symbol short TTIs, the DM-RSs of multiple short TTIs that do not cross the slot boundary in a normal TTI (1-ms subframe) may be placed on a shared symbol (first sharing method), or the DM-RSs of multiple short TTIs that do cross the slot boundary and/or the boundary between normal TTIs (subframe boundary) may be placed on a shared symbol (second sharing method).

### «First Sharing Method»

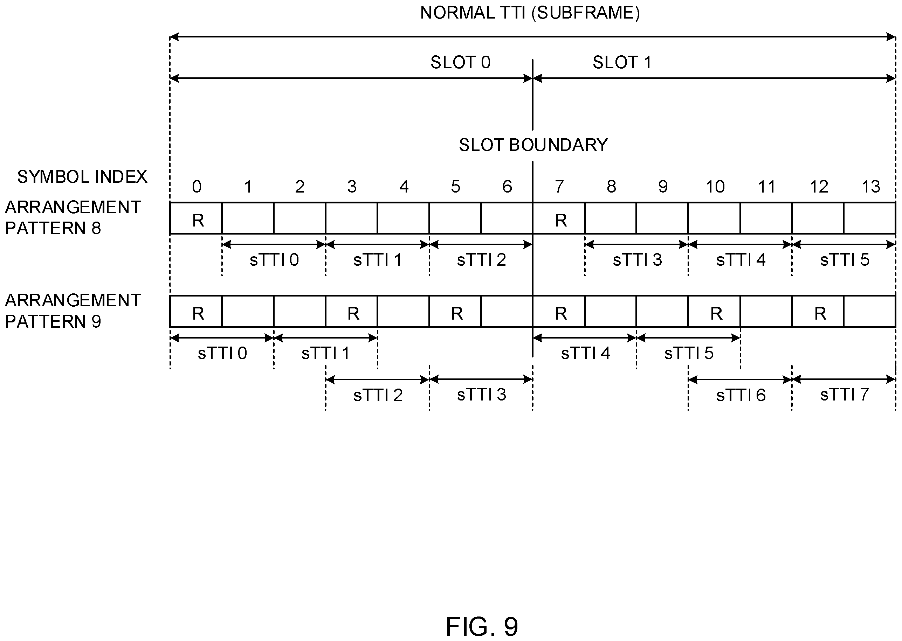

According to the first sharing method, a shared symbol is provided in a slot of a normal TTI, and the DM-RSs for the PUSCHs in a number of short TTIs in this slot are multiplexed. In other words, DM-RSs are mapped to a symbol that is selected based on the pattern in which short TTIs are arranged. FIG. 9 is a diagram to illustrate an example of the first sharing method for use when two-symbol short TTIs are used, according to the second aspect.

According to the first sharing method, as illustrated in arrangement pattern 8 of FIG. 9, a single shared symbol is provided in each slot of a normal TTI, and this single shared symbol may be shared by all short TTIs in the slot. For example, in arrangement pattern 8, in both slots 0 and 1, the first symbol is used as a shared symbol. The DM-RS for the PUSCHs in short TTIs 0 to 2 in slot 0 are multiplexed on symbol 0 in slot 0. Likewise, the DM-RSs for the PUSCHs in short TTIs 3 to 5 in slot 1 are multiplexed on symbol 7 of slot 1.

Alternatively, as illustrated in arrangement pattern 9 of FIG. 9, a shared symbol to be shared by two consecutive sTTIs may be provided in a slot of a normal TTI. For example, in slot 0 in arrangement pattern 9, symbol 3 is used as a shared symbol for short TTIs 1 and 2. The DM-RSs for the PUSCHs in short TTIs 1 and 2 are multiplexed on symbol 3. Also, in slot 1, symbol 10 is used as a shared symbol for short TTIs 5 and 6. the DM-RS for the PUSCHs in short TTIs 5 and 6 are multiplexed on symbol 10.

In arrangement pattern 9, short TTIs that do not share symbols with other short TTIs within each slot (for example short TTIs 0 and 3 in slot 0, short TTIs 4 and 7 in slot 1, and so on) may be provided.

### «Second Sharing Method»

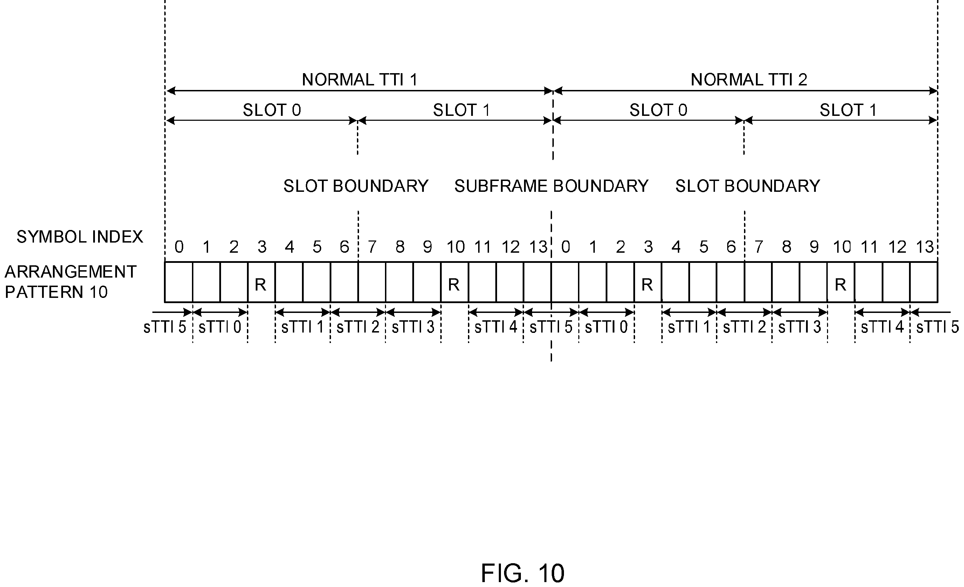

According to a second sharing method, a shared symbol is placed irrespective of the boundary between slots in a normal TTI and/or the boundary between normal TTIs (subframe boundary), and the DM-RSs for the PUSCHs in a number of subsequent short TTIs are multiplexed on this shared symbol. FIG. 10 is a diagram to illustrate an example of the second sharing method for use when two-symbol short TTIs are used, according to the second aspect.

According to the second sharing method, as illustrated in arrangement pattern 10 of FIG. 10, shared symbols may be placed for every predetermined number of short TTIs (predetermined number of symbols), regardless of the slot boundaries in normal TTIs or the boundaries between normal TTIs (subframe boundaries). For example, in arrangement pattern 10, a shared symbol is placed for every three short TTIs (that is, every six symbols), and, on each shared symbol, the DM-RSs for the PUSCHs in three subsequent short TTIs are multiplexed.

For example, in arrangement pattern 10, symbol 3 of normal TTI (subframe) 1 is shared by short TTI 1 in slot 0 of normal TTI 1, short TTI 2, which bridges over slot 0 and slot 1, and short TTI 3 in slot 1. That is, the DM-RSs for PUSCHs in a number of short TTIs belonging to different slots are multiplexed on this symbol 3.

Symbol 10 in normal TTI 1 is shared by short TTI 4 of normal TTI 1, short TTI 5, which bridges over normal TTI 1 and normal TTI 2, and short TTI 0 of normal TTI 2. That is, the DM-RSs for PUSCHs in a number of short TTIs belonging to different slots are multiplexed on symbol 10.

In this way, when it is allowed to multiplex DM-RSs pertaining to a number of short TTIs that cross the boundary between slots and the boundary between normal TTIs (subframe boundary), upon the same symbol, it becomes easy to reuse the arrangement of DM-RSs used in existing LTE systems (that is, when normal CPs are used, DM-RSs are placed in symbols 3 and 10).

### <Three/four symbols>

In the event short TTIs comprised of three/four symbols are used, as in the case of using two-symbol short TTIs, the DM-RSs in a number of short TTIs that do not cross the slot boundary in a normal TTI (1-ms subframe) may be placed on a shared symbol (first sharing method), or the DM-RSs in a number of short TTIs that cross the slot boundary and/or the boundary between normal TTIs (subframe boundary) may be placed on a shared symbol (second sharing method).

### «First Sharing Method»

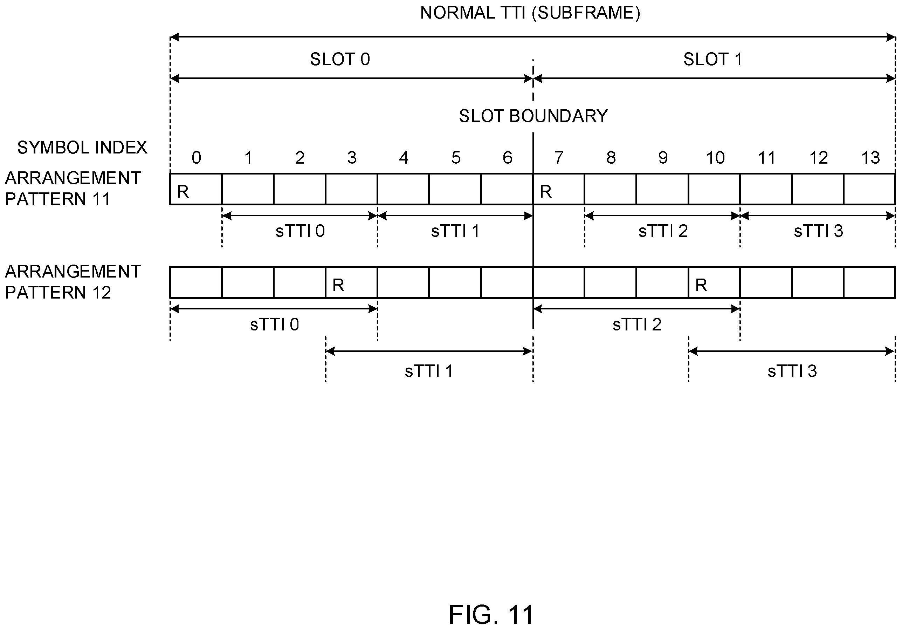

According to the first sharing method, a shared symbol is provided in a slot of a normal TTI, and the DM-RSs for the PUSCHs in a number of short TTIs in this slot are multiplexed. FIG. 11 is a diagram to illustrate an example of the first sharing method for use when short TTIs consisting of three/four symbols are used, according to the second aspect.

According to the first sharing method, as illustrated in arrangement pattern 11 of FIG. 11, a single shared symbol is provided in each slot of a normal TTI, and this single shared symbol may be shared by all short TTIs in the slot. In arrangement pattern 11, the first symbol in each slot is shared as a shared symbol by two three-symbol short TTIs in that slot.

To be more specific, in arrangement pattern 11, the DM-RSs for the PUSCHs in short TTIs 0 and 1 in slot 0 are multiplexed on symbol 0 of slot 0. Likewise, the DMRSs for the PUSCHs in short TTIs 2 and 3 in slot 1 are multiplexed on symbol 7 of slot 1.

Alternatively, as illustrated in arrangement pattern 12 of FIG. 11, a shared symbol to be shared by two consecutive sTTIs may be provided in a slot of a normal TTI. In arrangement pattern 12, the center symbol in each slot is shared by the preceding and succeeding short TTIs of four symbols. Thus, in arrangement pattern 12, a shared symbol is contained in a number of short TTIs.

For example, in slot 0 of arrangement pattern 12, symbol 3 is contained in both short TTIs 0 and 1, and used as a shared symbol. On symbol 3, the DM-RSs for the PUSCHs in short TTIs 0 and 1 are multiplexed. Also, in slot 1, symbol 10 is contained in both short TTIs 2 and 3, and used as a shared symbol. On symbol 10, the DM-RSs for the PUSCHs in short TTIs 2 and 3 are multiplexed.

### «Second Sharing Method»

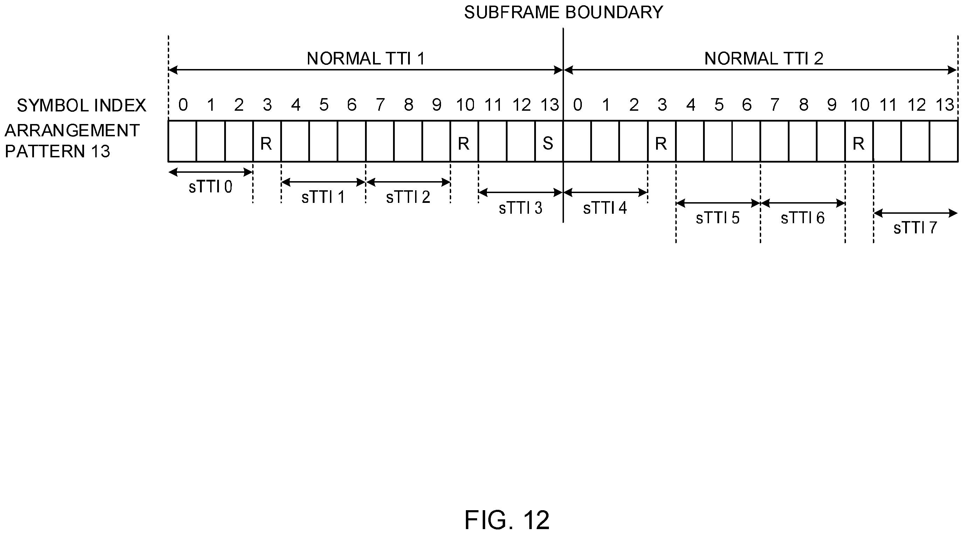

According to the second sharing method, a shared symbol is placed irrespective of the boundary between slots in a normal TTI and/or the boundary between normal TTIs (subframe boundary), and the DM-RSs for the PUSCHs in a number of subsequent short TTIs are multiplexed on this shared symbol. FIG. 12 is a diagram to illustrate an example of the second sharing method for use when short TTIs consisting of three/four symbols are used, according to the second aspect.

According to the second sharing method, as illustrated in FIG. 12, shared symbols may be placed for every predetermined number of short TTIs (predetermined number of symbols), regardless of the slot boundaries in normal TTIs or the boundaries between normal TTIs (subframe boundaries). In arrangement pattern 13 of FIG. 12, a shared symbol is placed for every two short TTIs (that is, each short TTI is formed with three symbols, and so there are six symbols), and, on each shared symbol, the DM-RSs for the PUSCHs in two subsequent short TTIs are multiplexed.

For example, in arrangement pattern 13, symbol 3 of normal TTI (subframe) 1 is shared by short TTI 1 and short TTI 2, and the DM-RSs for the PUSCHs in short TTIs 1 and 2 are multiplexed upon symbol 3. Furthermore, symbol 10 of normal TTI 2 is shared by short TTI 3 of normal TTI 1 and short TTI 4 of normal TTI 2. That is, the DM-RSs for PUSCHs in a number of short TTIs belonging to different normal TTIs are multiplexed on symbol 10.

In this way, when it is allowed to multiplex DM-RSs pertaining to a number of short TTIs that cross the boundary between normal TTIs (subframe boundary), upon the same symbol, it becomes easy to reuse the arrangement of DM-RSs used in existing LTE systems (that is, when normal CPs are used, DM-RSs are placed in symbols 3 and 10).

### (Third Aspect)

In accordance with a third aspect of the present invention, how the above-described arrangement patterns of UL short TTIs (hereinafter referred to as "short TTI patterns") are determined will be described.

The short TTI pattern may be designated explicitly from the radio base station through higher layer signaling and/or physical layer signaling. For higher layer signaling, for example, RRC signaling, broadcast information and so on can be used. For physical layer signaling, for example, downlink control information (DCI), which is communicated in normal TTIs, can be used.

Alternatively, short TTI patterns may be determined implicitly by user terminals. For example, a user terminal may determine the short TTI pattern to apply to the UL based on at least one of the short TTI pattern in the DL, and the timing and period of a DL control channel (for example, PDCCH (Physical Downlink Control CHannel), hereinafter referred to as "PDCCH") in short TTIs. For example, short TTI patterns for the DL and short TTI patterns for the UL may be provided in advance in association with each other.

Note that, when the short TTI pattern for the DL is determined based on at least one of the short TTI pattern in the DL, and the timing and period of a DL control channel (for example, PDCCH) in short TTIs, a subframe that references the DL short TTI pattern and the timing and period of a DL control channel (for example, PDCCH) in short TTIs, and a subframe where the UL short TTI pattern is determined based on at least one of these may have different indices. For example, when the index of a subframe that references the short TTI pattern in the DL and the timing and period of a DL control channel (for example, PDCCH) in short TTIs is n, the indices of subframes where the UL short TTI pattern is determined based on at least one of these may be n+1, n+2 and so on. The associations of the indices of DL and UL subframes may be determined in advance, or may be configured by higher layer signaling such as RRC signaling.

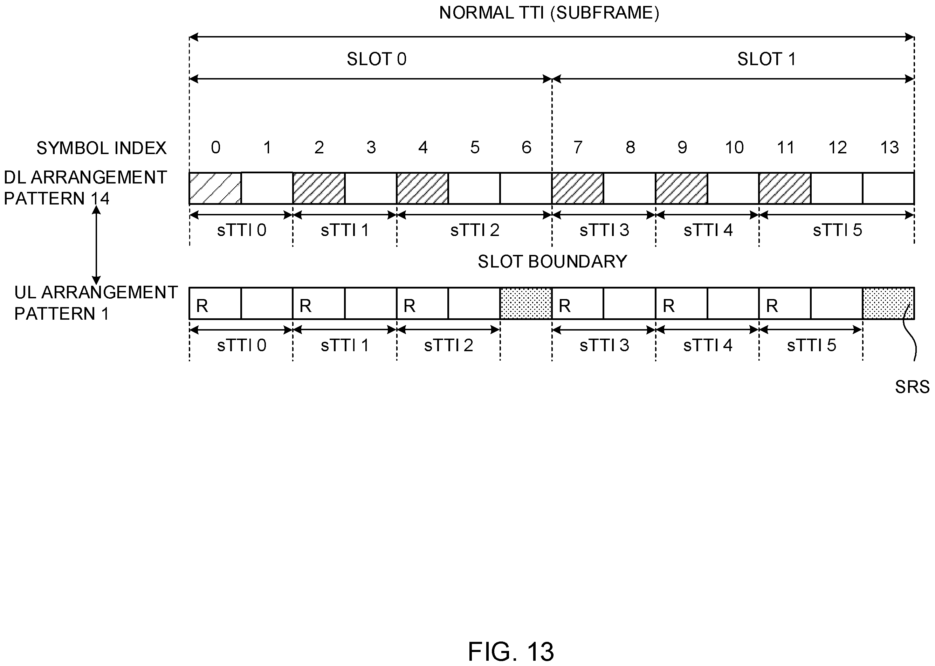

Now, with reference to FIG. 13 to FIG. 15, examples of determining UL short TTI patterns based on at least one of the short TTI pattern in the DL and the timing and period of a PDCCH in short TTIs will be described. FIG. 13 to FIG. 15 are diagrams to illustrate examples of determining UL short TTI patterns implicitly.

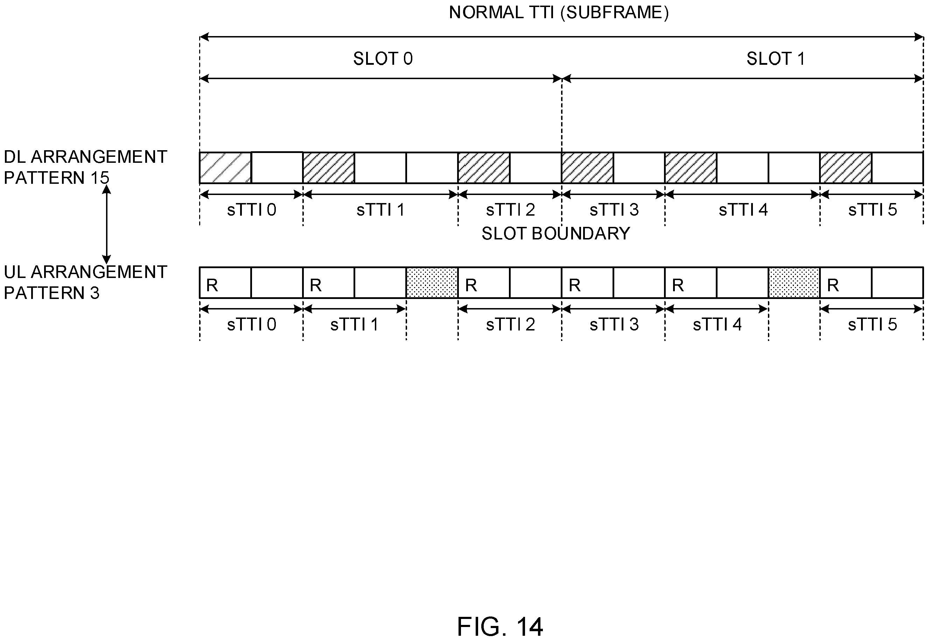

FIG. 13 and FIG. 14 illustrate cases where, in the DL, short TTIs of two/three symbols are used, and the short TTIs are placed so as not to cross the slot boundary in a normal TTI. In this case, in the UL, too, short TTIs may be formed with two/three symbols, and the short TTIs may be placed so as not to cross the slot boundary in the normal TTI.

To be more specific, each UL short TTI in a slot may be configured to start from the same symbol as that of each DL short TTI. In this case, the short TTIs are configured not to cross the slot boundary, so that SC-FDMA (DFT-S-OFDM) can be used in UL short TTIs, as in existing LTE systems.

For example, referring to FIG. 13, in slot 0 of the normal TTI, short TTI 0 of the DL starts at symbol 0, short TTI 1 starts at symbol 2, and short TTI 2 starts at symbol 4. In this case, the short TTI pattern for the UL may be determined so that short TTI 0 of the UL also starts at symbol 0, short TTI 1 starts at symbol 2, and short TTI 2 starts at symbol 4.

Note that, in FIG. 13, UL short TTI 2 is made up of two symbols and symbol 7 is blank, but this is by no means limiting. Like DL short TTI 2, UL short TTI 2 may be formed with three symbols, including symbol 7.

Also, referring to FIG. 14, in slot 0 of the normal TTI, short TTI 0 of the DL starts at symbol 0, short TTI 1 starts at symbol 2, and short TTI 2 starts at symbol 5. In this case, the short TTI pattern for the UL may be determined so that short TTI 0 of the UL also starts at symbol 0, short TTI 1 starts at symbol 2, and short TTI 2 starts at symbol 5.

Note that, in FIG. 14, UL short TTI 1 is made up of two symbols and symbol 4 is blank, but this is by no means limiting. Like DL short TTI 1, UL short TTI 1 may be formed with three symbols, including symbol 4.

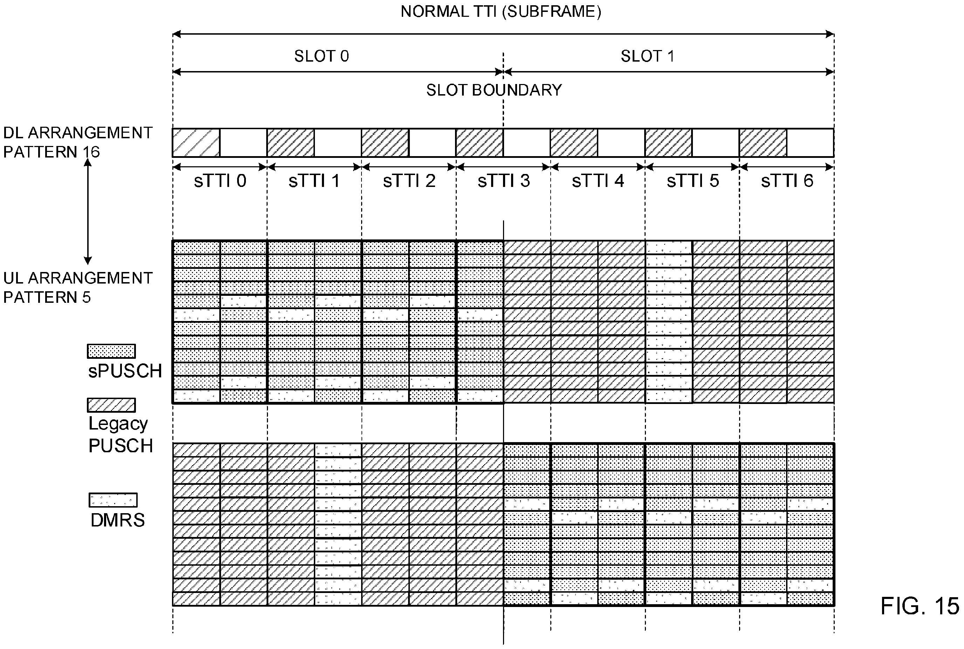

FIG. 15 illustrates a case where, in the DL, short TTIs of two/three symbols are used, and the short TTIs are placed to cross the slot boundary in a normal TTI. In this case, in the UL, too, short TTIs may be formed with two/three symbols, and the short TTIs may be placed to cross the slot boundary in the normal TTI. In this case, the short TTIs are configured to cross the slot boundary, so that it is desirable to use OFDMA in UL short TTIs.

For example, in the normal TTI of FIG. 15, two-symbol short TTIs 0 to 6 of the DL are placed to cross the slot boundary. In this case, UL short TTIs 0 to 6 may also start in the same symbols as those of DL short TTIs 0 to 6.

### (Radio Communication System)

Now, the structure of a radio communication system according to the present embodiment will be described below. In this radio communication system, each radio communication method according to the above-described embodiments is employed. Note that the radio communication method according to each embodiment described above may be used alone or may be used in combination.

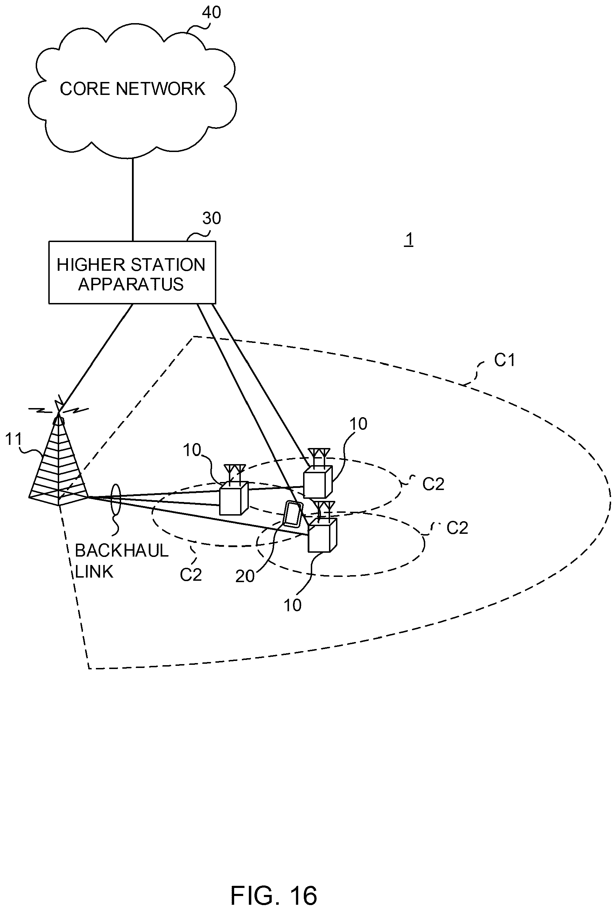

FIG. 16 is a diagram to illustrate an example of a schematic structure of a radio communication system according to the present embodiment. A radio communication system 1 can adopt carrier aggregation (CA) and/or dual connectivity (DC) to group a plurality of fundamental frequency blocks (component carriers) into one, where the LTE system band (for example, 20 MHz) constitutes one unit. The radio communication system 1 may be also referred to as "SUPER 3G," "LTE-A (LTE-Advanced)," "IMT-Advanced," "4G," "5G," "FRA (Future Radio Access)," "NR (New RAT (New Radio Access Technology))," and so on.

The radio communication system 1 illustrated in FIG. 16 includes a radio base station 11 that forms a macro cell C1, and radio base stations 12a to 12c that are placed within the macro cell C1 and that form small cells C2, which are narrower than the macro cell C1. Also, user terminals 20 are placed in the macro cell C1 and in each small cell C2. A structure in which different numerologies are applied between cells and/or within cells may be adopted here.

The user terminals 20 can connect with both the radio base station 11 and the radio base stations 12. The user terminals 20 may use the macro cell C1 and the small cells C2, which use different frequencies, at the same time, by means of CA or DC. Also, the user terminals 20 can execute CA or DC by using a plurality of cells (CCs) (for example, two or more CCs). Furthermore, the user terminals can use licensed band CCs and unlicensed band CCs as a plurality of cells.

Furthermore, the user terminals 20 can communicate by using time division duplexing (TDD) or frequency division duplexing (FDD) in each cell. A TDD cell and an FDD cell may be referred to as a "TDD carrier (frame structure type 2)" and an "FDD carrier (frame structure type 1)," respectively.

Furthermore, in each cell (carrier), a single numerology may be employed, or a number of varying numerologies may be used.

Between the user terminals 20 and the radio base station 11, communication can be carried out using a carrier of a relatively low frequency band (for example, 2 GHz) and a narrow bandwidth (referred to as, for example, an "existing carrier," a "legacy carrier," and so on). Meanwhile, between the user terminals 20 and the radio base stations 12, a carrier of a relatively high frequency band (for example, 3.5 GHz, 5 GHz, 30 to 70 GHz and so on) and a wide bandwidth may be used, or the same carrier as that used in the radio base station 11 may be used. Note that the frequency bands for use in each radio base station are by no means limited to these structures.

A structure may be employed here, in which wire connection (for example, optical fiber, which is compliance with the CPRI (Common Public Radio Interface), the X2 interface, and so on) or wireless connection is established between the radio base station 11 and the radio base station 12 (or between two radio base stations 12).

The radio base station 11 and the radio base stations 12 are each connected with higher station apparatus 30, and connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. Also, the radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter, the radio base stations 11 and 12 will be collectively referred to as "radio base stations 10," unless specified otherwise.

The user terminals 20 are terminals to support various communication schemes such as LTE, LTE-A and so on, and may be either mobile communication terminals or stationary communication terminals. Furthermore, the user terminals 20 can perform inter-terminal (D2D) communication with other user terminals 20.

In the radio communication system 1, as radio access schemes, OFDMA (orthogonal Frequency Division Multiple Access) can be applied to the downlink (DL), and SC-FDMA (Single-Carrier Frequency Division Multiple Access) can be applied to the uplink (UL). OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system band into bands formed with one or continuous resource blocks per terminal, and allowing a plurality of terminals to use mutually different bands. Note that the uplink and downlink radio access schemes are not limited to the combination of these, and OFDMA may be used in the UL.

In the radio communication system 1, a DL shared channel (PDSCH (Physical Downlink Shared CHannel), which is also referred to as, for example, a "DL data channel"), which is shared by each user terminal 20, a broadcast channel (PBCH (Physical Broadcast CHannel)), L1/L2 control channels and so on, are used as DL channels. User data, higher layer control information and SIBs (System Information Blocks) are communicated in the PDSCH. Also, the MIB (Master Information Block) is communicated in the PBCH.

The L1/L2 control channels include DL control channels (PDCCH (Physical Downlink Control CHannel), EPDCCH (Enhanced Physical Downlink Control CHannel), and/or other channels), a PCFICH (Physical Control Format Indicator CHannel), a PHICH (Physical Hybrid-ARQ Indicator CHannel) and so on. Downlink control information (DCI), including PDSCH and PUSCH scheduling information, is communicated through the PDCCH. The number of OFDM symbols to use for the PDCCH is communicated by the PCFICH. The EPDCCH is frequency-division-multiplexed with the PDSCH and used to communicate DCI and so on, like the PDCCH. HARQ retransmission command information (ACK/NACK) in response to the PUSCH can be communicated using at least one of the PHICH, the PDCCH and the EPDCCH.

In the radio communication system 1, a UL shared channel (PUSCH (Physical Uplink Shared CHannel), which is also referred to as "UL data channel" and so on), which is shared by each user terminal 20, a UL control channel (PUCCH (Physical Uplink Control CHannel)), a random access channel (PRACH (Physical Random Access CHannel)) and so on are used as UL channels. User data, higher layer control information and so on are communicated by the PUSCH. Uplink control information (UCI), including at least one of DL signal retransmission control information (A/N), channel state information (CSI) and so on, is communicated in the PUSCH or the PUCCH. By means of the PRACH, random access preambles for establishing connections with cells are communicated.

### (Radio Base Station)

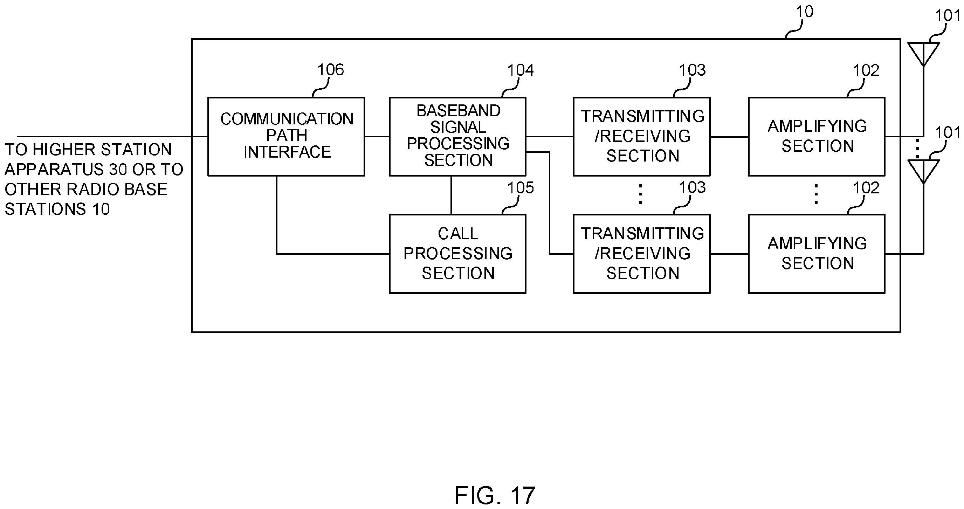

FIG. 17 is a diagram to illustrate an example of an overall structure of a radio base station according to the present embodiment. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to transmission processes, including a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to the transmitting/receiving sections 103.

Baseband signals that are precoded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101.

The transmitting/receiving sections 103 can be constituted by transmitters/receivers, transmitting/receiving circuits or transmitting/receiving apparatus that can be described based on general understanding of the technical field to which the present invention pertains. Note that a transmitting/receiving section 103 may be structured as a transmitting/receiving section in one entity, or may be constituted by a transmitting section and a receiving section.

Meanwhile, as for UL signals, radio frequency signals that are received in the transmitting/receiving antennas 101 are amplified in the amplifying sections 102. The transmitting/receiving sections 103 receive the UL signals amplified in the amplifying sections 102. The received signals are converted into the baseband signal through frequency conversion in the transmitting/receiving sections 103, and output to the baseband signal processing section 104.

In the baseband signal processing section 104, UL data that is included in the UL signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as setting up and releasing communication channels, manages the state of the radio base station 10 and manages the radio resources.

The communication path interface section 106 transmits and receives signals to and from the higher station apparatus 30 via a predetermined interface. Also, the communication path interface 106 may transmit and/or receive signals (backhaul signaling) with neighboring radio base stations 10 via an inter-base station interface (for example, optical fiber, which is in compliance with the CPRI (Common Public Radio Interface), the X2 interface, and so on).

In addition, the transmitting/receiving sections 103 transmit DL signals (including at least one of DL data signals, DL control signals and DL reference signals) to a number of user terminals 20 that use different numerologies, and receive UL signals (including at least one of UL data signals, UL control signals and UL reference signals) from these user terminals 20.

In addition, the transmitting/receiving sections 103 receive UCI from the user terminals 20 through a UL data channel (for example, PUSCH) or a UL control channel (for example, PUCCH). This UCI contains at least one of A/Ns in response to DL data channels (for example, PDSCH, sPDSCH for short TTIs, and so on), CSI, and SRs.

For example, the transmitting/receiving sections 103 receive DM-RSs, short PUCCHs and/or short PUSCHs, which are transmitted from the user terminals 20 based on predetermined arrangement patterns of short TTIs (first aspect and second aspect).

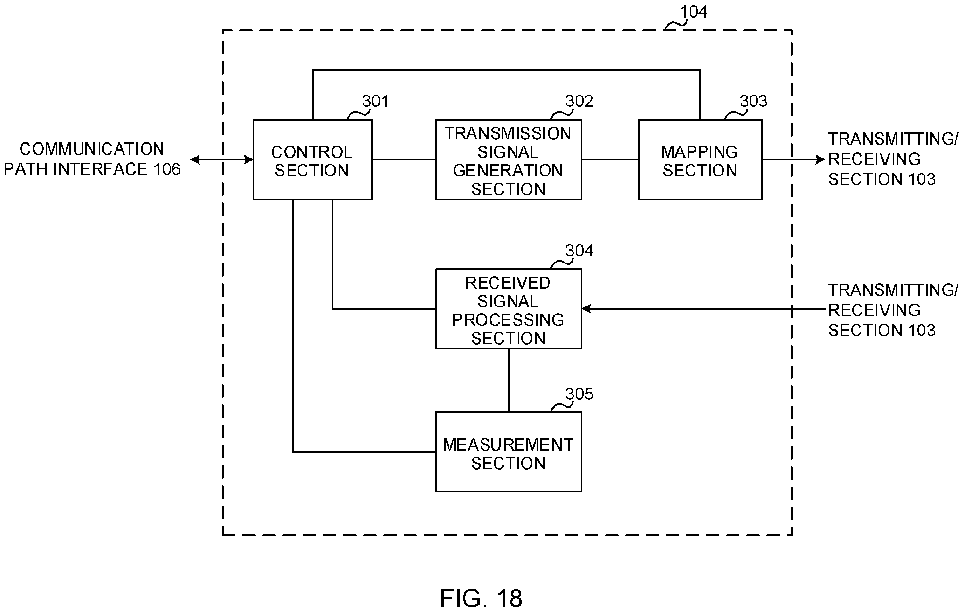

FIG. 18 is a diagram to illustrate an example of a functional structure of a radio base station according to the present embodiment. Note that, although FIG. 18 primarily illustrates functional blocks that pertain to characteristic parts of the present embodiment, the radio base station 10 has other functional blocks that are necessary for radio communication as well. As illustrated in FIG. 18, the baseband signal processing section 104 has a control section 301, a transmission signal generation section 302, a mapping section 303, a received signal processing section 304 and a measurement section 305.

The control section 301 controls the whole of the radio base station 10. The control section 301 controls, for example, generation of DL signals in the transmission signal generation section 302, mapping of DL signals in the mapping section 303, receiving processes (for example, demodulation) for UL signals in the received signal processing section 304, and measurements in the measurement section 305.

To be more specific, the control section 301 schedules the user terminals 20. For example, control section 301 may schedule multiple carriers (DL carriers and/or UL carriers) with short TTIs of varying durations. Also, the control section 301 may schedule carriers (DL carriers and/or UL carriers) of normal TTI duration.

In addition, the control section 301 may configure a number of carriers (DL carriers and/or UL carriers) with short TTIs of the same duration and/or varying durations, in the user terminals 20. These carriers may be configured using at least one of higher layer signaling, system information, and L1/L2 control channels.

The control section 301 can be constituted by a controller, a control circuit or control apparatus that can be described based on general understanding of the technical field to which the present invention pertains.

The transmission signal generation section 302 generates DL signals (including DL data, scheduling information, short TTI configuration information and so on) as commanded by the control section 301, and outputs these signals to the mapping section 303.

The transmission signal generation section 302 can be constituted by a signal generator, a signal generation circuit or signal generation apparatus that can be described based on general understanding of the technical field to which the present invention pertains.

The mapping section 303 maps the DL signals generated in the transmission signal generation section 302 to predetermined radio resources as commanded by the control section 301, and outputs these signals to the transmitting/receiving sections 103. For the mapping section 303, a mapper, a mapping circuit or mapping apparatus that can be described based on general understanding of the technical field to which the present invention pertains can be used.

The received signal processing section 304 performs receiving processes (for example, demapping, demodulation, decoding and so on) for UL signals transmitted from the user terminals 20 (including, for example, UL data signals, UL control signals, UL reference signals, UCI, short TTI support information and so forth). To be more specific, the received signal processing section 304 performs UL signal receiving processes based on the numerologies configured in the user terminals 20. To be more specific, the received signal processing section 304 may output the received signals, the signals after the receiving processes and so on, to the measurement section 305. In addition, the received signal processing section 304 performs receiving processes for A/Ns that arrive in response to DL signals, and outputs ACKs or NACKs to the control section 301.

In addition, the received signal processing section 304 receives and processes DM-RSs, short PUCCHs and/or short PUSCHs that are transmitted from the user terminals 20 based on predetermined arrangement patterns of short TTIs (first aspect and second aspect).

The measurement section 305 conducts measurements with respect to the received signals. The measurement section 305 can be constituted by a measurer, a measurement circuit or measurement apparatus that can be described based on general understanding of the technical field to which the present invention pertains.

Also, the measurement section 305 may measure the channel quality in the UL based on, for example, the received power (for example, RSRP (Reference Signal Received Power)) and/or the received quality (for example, RSRQ (Reference Signal Received Quality)) of UL reference signals. The measurement results may be output to the control section 301.

### (User Terminal)

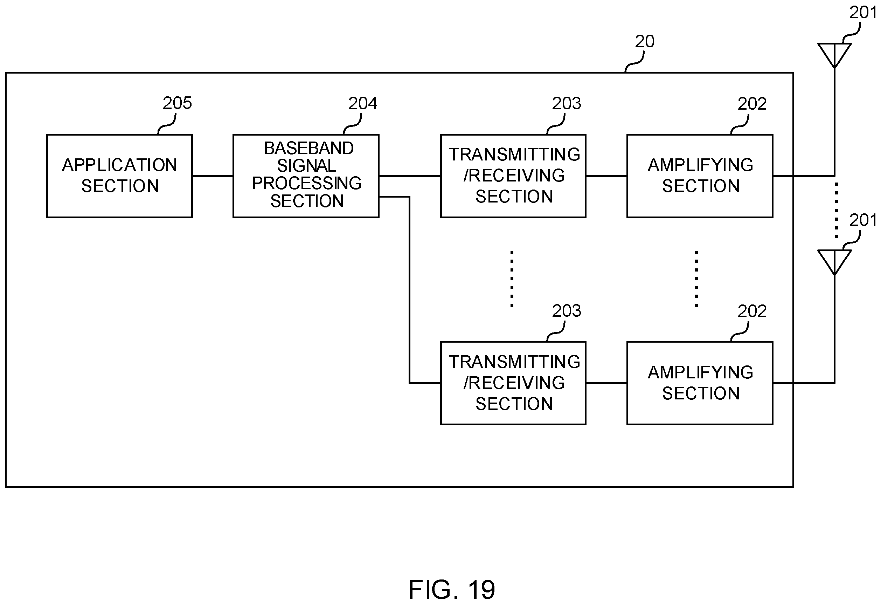

FIG. 19 is a diagram to illustrate an example of an overall structure of a user terminal according to the present embodiment. A user terminal 20 has a plurality of transmitting/receiving antennas 201 for MIMO communication, amplifying sections 202, transmitting/receiving sections 203, a baseband signal processing section 204 and an application section 205.

Radio frequency signals that are received in a plurality of transmitting/receiving antennas 201 are each amplified in the amplifying sections 202. The transmitting/receiving sections 203 receive the DL signals amplified in the amplifying sections 202. The received signals are subjected to frequency conversion and converted into the baseband signal in the transmitting/receiving sections 203, and output to the baseband signal processing section 204.

In the baseband signal processing section 204, the baseband signal that is input is subjected to an FFT process, error correction decoding, a retransmission control receiving process and so on. The DL data is forwarded to the application section 205. The application section 205 performs processes related to higher layers above the physical layer and the MAC layer. Also, the broadcast information is also forwarded to application section 205.

Meanwhile, UL data is input from the application section 205 to the baseband signal processing section 204. The baseband signal processing section 204 performs a retransmission control transmission process (for example, an HARQ transmission process), channel coding, rate matching, puncturing, a discrete Fourier transform (DFT) process, an IFFT process and so on, and the result is forwarded to each transmitting/receiving section 203. UCI (for example, DL retransmission control information, channel state information, etc.) is also subjected to channel encoding, rate matching, puncturing, a DFT process, an IFFT process and so on, and forwarded to each transmitting/receiving section 203.

The baseband signals that are output from the baseband signal processing section 204 are converted into a radio frequency band in the transmitting/receiving sections 203 and transmitted. The radio frequency signals that are subjected to frequency conversion in the transmitting/receiving sections 203 are amplified in the amplifying sections 202, and transmitted from the transmitting/receiving antennas 201.

Furthermore, the transmitting/receiving sections 203 receive DL signals (including DL data signals, DL control signals, DL reference signals and so on) of the numerology configured in the user terminal 20, and transmit UL signals (including UL data signals, UL control signals, UL reference signals and so forth) based on this numerology.

In addition, the transmitting/receiving sections 203 transmit UCI to the radio base station 10 through a UL data channel (for example, PUSCH) or a UL control channel (for example, PUCCH). This UCI contains at least one of A/Ns in response to DL data channels (for example, PDSCH, sPDSCH for short TTIs, and so on), CSI, and SRs.

For example, the transmitting/receiving sections 203 transmit DM-RSs, short PUCCHs and/or short PUSCHs, which are mapped based on predetermined arrangement patterns of short TTIs, to the radio base station 10 (first aspect and second aspect).

The transmitting/receiving sections 203 can be constituted by transmitters/receivers, transmitting/receiving circuits or transmitting/receiving apparatus that can be described based on general understanding of the technical field to which the present invention pertains. Furthermore, a transmitting/receiving section 203 may be structured as one transmitting/receiving section, or may be formed with a transmitting section and a receiving section.

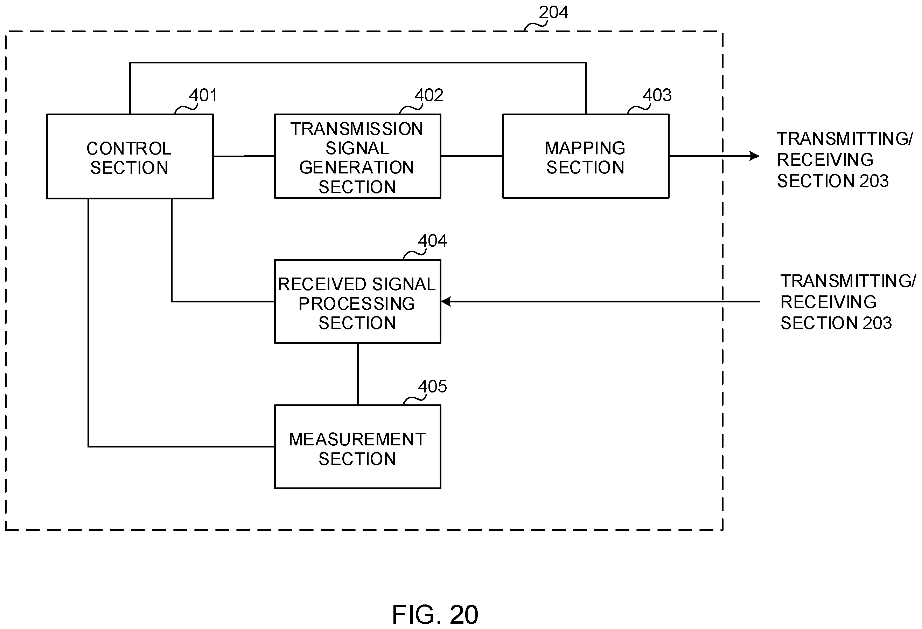

FIG. 20 is a diagram to illustrate an example of a functional structure of a user terminal according to the present embodiment. Note that, although FIG. 20 primarily illustrates functional blocks that pertain to characteristic parts of the present embodiment, the user terminal 20 has other functional blocks that are necessary for radio communication as well. As illustrated in FIG. 20, the baseband signal processing section 204 provided in the user terminal 20 has a control section 401, a transmission signal generation section 402, a mapping section 403, a received signal processing section 404 and a measurement section 405.

The control section 401 controls the whole of the user terminal 20. The control section 401 controls, for example, generation of UL signals in the transmission signal generation section 402, mapping of UL signals in the mapping section 403, DL signal receiving processes in the received signal processing section 404, measurements in the measurement section 405, and so on.

In addition, the control section 401 may configure a number of carriers (DL carriers and/or UL carriers) with short TTIs of the same duration and/or varying durations, in the user terminal 20. These carriers may be configured using at least one of higher layer signaling from the radio base station 10 (for example, RRC signaling), system information and L1/L2 control channels.

The control section 401 exerts control so that DM-RSs, short PUCCHs and/or short PUSCHs are mapped based on predetermined arrangement patterns of short TTIs, and transmitted to the radio base station 10 (first aspect and second aspect).

The control section 401 can be constituted by a controller, a control circuit or control apparatus that can be described based on general understanding of the technical field to which the present invention pertains.

In the transmission signal generation section 402, UL signals (including UL data signals, UL control signals, UL reference signals, UCI, short TTI support information and so on) are generated (through, for example, encoding, rate matching, puncturing, modulation and so forth) based on commands from the control section 401, and output to the mapping section 403. The transmission signal generation section 402 can be constituted by a signal generator, a signal generation circuit or signal generation apparatus that can be described based on general understanding of the technical field to which the present invention pertains.

The mapping section 403 maps the UL signals generated in the transmission signal generation section 402 to radio resources based on commands from the control section 401, and output these to the transmitting/receiving sections 203. The mapping section 403 can be constituted by a mapper, a mapping circuit or mapping apparatus that can be described based on general understanding of the technical field to which the present invention pertains.

The received signal processing section 404 performs receiving processes (for example, demapping, demodulation, decoding and so on) for DL signals (including DL data signals, scheduling information, DL control signals, DL reference signals, short TTI configuration information and so forth). The received signal processing section 404 outputs the information received from the radio base station 10, to the control section 401. The received signal processing section 404 outputs, for example, broadcast information, system information, high layer control information related to higher layer signaling such as RRC signaling, physical layer control information (L1/L2 control information) and so on, to the control section 401.

The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present invention.

The measurement section 405 measures channel states based on reference signals (for example, CSI-RS) from the radio base station 10, and outputs the measurement results to the control section 401. Note that channel states may be measured on a per CC basis.

The measurement section 405 can be constituted by a signal processor, a signal processing circuit or signal processing apparatus, and a measurer, a measurement circuit or measurement apparatus that can be described based on general understanding of the technical field to which the present invention pertains.

### (Hardware Structure)

Note that the block diagrams that have been used to describe the above embodiments illustrate blocks in functional units. These functional blocks (components) may be implemented in arbitrary combinations of hardware and/or software. Also, the means for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire or wireless, for example) and using these multiple pieces of apparatus.

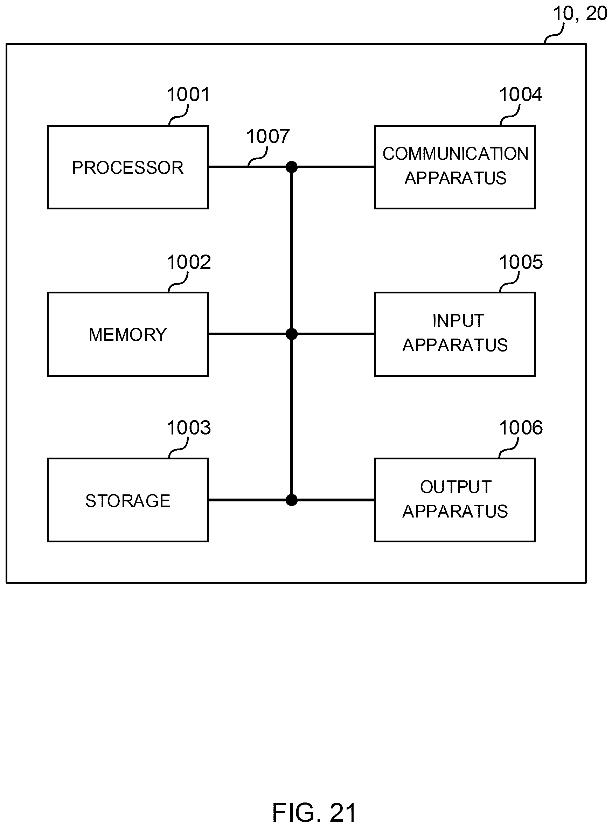

That is, a radio base station, a user terminal and so on according to embodiments of the present invention may function as a computer that executes the processes of the radio communication method of the present invention. FIG. 21 is a diagram to illustrate an example hardware structure of a radio base station and a user terminal according to the present embodiment. Physically, the above-described radio base stations 10 and user terminals 20 may be formed as computer apparatus that includes a processor 1001, a memory 1002, a storage 1003, communication apparatus 1004, input apparatus 1005, output apparatus 1006, a bus 1007 and so on.

Note that, in the following description, the word "apparatus" may be replaced by "circuit," "device," "unit" and so on. Note that the hardware structure of a radio base station 10 and a user terminal 20 may be designed to include one or more of each apparatus illustrated in the drawing, or may be designed not to include part of the apparatus.

For example, although only one processor 1001 is illustrated, a plurality of processors may be provided. Furthermore, processes may be implemented with one processor, or processes may be implemented simultaneously, in sequence, or in different manners, on one or more processors. Note that the processor 1001 may be implemented with one or more chips.

Each function of the radio base station 10 and the user terminal 20 is implemented by allowing predetermined software (programs) to be read on hardware such as the processor 1001 and the memory 1002, and by controlling the processor 1001 to do calculations, the communication apparatus 1004 to communicate, and the memory 1002 and the storage 1003 to read and/or write data.

The processor 1001 may control the whole computer by, for example, running an operating system. The processor 1001 may be formed with a central processing unit (CPU), which includes interfaces with peripheral apparatus, control apparatus, computing apparatus, a register and so on. For example, the above-described baseband signal processing section 104 (204), call processing section 105 and others may be implemented by the processor 1001.

Furthermore, the processor 1001 reads programs (program codes), software modules or data, from the storage 1003 and/or the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register," a "cache," a "main memory (primary storage apparatus)" and so on. The memory 1002 can store executable programs (program codes), software modules and so on for implementing the radio communication methods according to embodiments of the present invention.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for allowing inter-computer communication by using wired and/or wireless networks, and may be referred to as, for example, a "network device," a "network controller," a "network card," a "communication module" and so on. The communication apparatus 1004 may be comprised of a high frequency switch, a duplexer, a filter, a frequency synthesizer and so on in order to realize, for example, frequency division duplex (FDD) and/or time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp and so on). Note that the input apparatus 1005 and the output apparatus 1006 may be provided in an integrated structure (for example, a touch panel).

Furthermore, these types of apparatus, including the processor 1001, the memory 1002 and others, are connected by a bus 1007 for communicating information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

### (Variations)

Note that the terminology used in this specification and the terminology that is needed to understand this specification may be replaced by other terms that convey the same or similar meanings. For example, "channels" and/or "symbols" may be replaced by "signals (or "signaling")." Also, "signals" may be "messages." A reference signal may be abbreviated as an "RS," and may be referred to as a "pilot," a "pilot signal" and so on, depending on which standard applies. Furthermore, a "component carrier (CC)" may be referred to as a "cell," a "frequency carrier," a "carrier frequency" and so on.

Furthermore, a radio frame may be comprised of one or more periods (frames) in the time domain. Each of one or more periods (frames) constituting a radio frame may be referred to as a "subframe." Furthermore, a subframe may be comprised of one or more slots in the time domain. Furthermore, a slot may be comprised of one or more symbols in the time domain (OFDM (Orthogonal Frequency Division Multiplexing) symbols, SC-FDMA (Single Carrier Frequency Division Multiple Access) symbols, and so on).

A radio frame, a subframe, a slot and a symbol all represent the time unit in signal communication. A radio frame, a subframe, a slot and a symbol may be each called by other applicable names. For example, one subframe may be referred to as a "transmission time interval (TTI)," a plurality of consecutive subframes may be referred to as a "TTI," or one slot may be referred to as a "TTI." That is, a subframe and a TTI may be a subframe (1 ms) in existing LTE, may be a shorter period than 1 ms (for example, one to thirteen symbols), or may be a longer period of time than 1 ms.

Here, a TTI refers to the minimum time unit of scheduling in radio communication, for example. For example, in LTE systems, a radio base station schedules the allocation of radio resources (such as the frequency bandwidth and transmission power that can be used by each user terminal) for each user terminal in TTI units. Note that the definition of TTIs is not limited to this. The TTI may be the transmission time unit of channel-encoded data packets (transport blocks), or may be the unit of processing in scheduling, link adaptation and so on.

A TTI having a time duration of 1 ms may be referred to as a "normal TTI (TTI in LTE Rel. 8 to 12)," a "long TTI," a "normal subframe," a "long subframe," and so on. A TTI that is shorter than a normal TTI may be referred to as a "shortened TTI," a "short TTI," a "shortened subframe," a "short subframe," and so on.

A resource block (RB) is the unit of resource allocation in the time domain and the frequency domain, and may include one or a plurality of consecutive subcarriers in the frequency domain. Also, an RB may include one or more symbols in the time domain, and may be one slot, one subframe or one TTI in length. One TTI and one subframe each may be comprised of one or more resource blocks. Note that an RB may be referred to as a "physical resource block (PRB (Physical RB))," a "PRB pair," an "RB pair," and so on.

Furthermore, a resource block may be comprised of one or more resource elements (REs). For example, one RE may be a radio resource field of one subcarrier and one symbol.

Note that the above-described structures of radio frames, subframes, slots, symbols and so on are merely examples. For example, configurations such as the number of subframes included in a radio frame, the number of slots included in a subframe, the number of symbols and RBs included in a slot, the number of subcarriers included in an RB, the number of symbols in a TTI, the symbol duration and the cyclic prefix (CP) duration can be variously changed.

Also, the information and parameters described in this specification may be represented in absolute values or in relative values with respect to predetermined values, or may be represented in other information formats. For example, radio resources may be specified by predetermined indices. In addition, equations to use these parameters and so on may be used, apart from those explicitly disclosed in this specification.

The names used for parameters and so on in this specification are in no respect limiting. For example, since various channels (PUCCH (Physical Uplink Control CHannel), PDCCH (Physical Downlink Control CHannel) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals and so on can be output from higher layers to lower layers and/or from lower layers to higher layers. Information, signals and so on may be input and output via a plurality of network nodes.

The information, signals and so on that are input and/or output may be stored in a specific location (for example, a memory), or may be managed using a management table. The information, signals and so on to be input and/or output can be overwritten, updated or appended. The information, signals and so on that are output may be deleted. The information, signals and so on that are input may be transmitted to other pieces of apparatus.

Reporting of information is by no means limited to the aspects/embodiments described in this specification, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (the master information block (MIB), system information blocks (SIBs) and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)" and so on. Also, RRC signaling may be referred to as "RRC messages," and can be, for example, an RRC connection setup message, RRC connection reconfiguration message, and so on. Also, MAC signaling may be reported using, for example, MAC control elements (MAC CEs (Control Elements)).

Also, reporting of predetermined information (for example, reporting of information to the effect that "X holds") does not necessarily have to be sent explicitly, and can be sent implicitly (by, for example, not reporting this piece of information, or by reporting a different piece of information).

Decisions may be made in values represented by one bit (0 or 1), may be made in Boolean values that represent true or false, or may be made by comparing numerical values (for example, comparison against a predetermined value).

Software, whether referred to as "software," "firmware," "middleware," "microcode" or "hardware description language," or called by other names, should be interpreted broadly, to mean instructions, instruction sets, codes, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation, microwaves and so on), these wired technologies and/or wireless technologies are also included in the definition of communication media.

The terms "system" and "network" as used herein are used interchangeably.

As used herein, the terms "base station (BS)," "radio base station," "eNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or more (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part or all of the coverage area of a base station and/or a base station subsystem that provides communication services within this coverage.

As used herein, the terms "mobile station (MS)" "user terminal," "user equipment (UE)" and "terminal" may be used interchangeably. A base station may be referred to as a "fixed station," "NodeB," "eNodeB (eNB)," "access point," "transmission point," "receiving point," "femto cell," "small cell" and so on.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client" or some other suitable terms.

Furthermore, the radio base stations in this specification may be interpreted as user terminals. For example, each aspect/embodiment of the present invention may be applied to a configuration in which communication between a radio base station and a user terminal is replaced with communication among a number of user terminals (D2D (Device-to-Device)). In this case, user terminals 20 may have the functions of the radio base stations 10 described above. In addition, wording such as "uplink" and "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Certain actions which have been described in this specification to be performed by base stations may, in some cases, be performed by higher nodes (upper nodes). In a network comprised of one or more network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments illustrated in this specification may be used individually or in combinations, which may be switched depending on the mode of implementation. The order of processes, sequences, flowcharts and so on that have been used to describe the aspects/embodiments herein may be re-ordered as long as inconsistencies do not arise. For example, although various methods have been illustrated in this specification with various components of steps in exemplary orders, the specific orders that are illustrated herein are by no means limiting.

The aspects/embodiments illustrated in this specification may be applied to systems that use LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR (New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods, and/or next-generation systems that are enhanced based on these.

The phrase "based on" as used in this specification does not mean "based only on," unless otherwise specified. In other words, the phrase "based on" means both "based only on" and "based at least on."

Reference to elements with designations such as "first," "second" and so on as used herein does not generally limit the number/quantity or order of these elements. These designations are used herein only for convenience, as a method of distinguishing between two or more elements. In this way, reference to the first and second elements does not imply that only two elements may be employed, or that the first element must precede the second element in some way.

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database or some other data structure), ascertaining and so on. Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on. In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

As used herein, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical or a combination of these. As used herein, two elements may be considered "connected" or "coupled" to each other by using one or more electrical wires, cables and/or printed electrical connections, and, as a number of non-limiting and non-inclusive examples, by using electromagnetic energy, such as electromagnetic energy having wavelengths in the radio frequency, microwave and optical regions (both visible and invisible).

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described herein. The present invention can be implemented with various corrections and in various modifications, without departing from the spirit and scope of the present invention defined by the recitations of claims. Consequently, the description herein is provided only for the purpose of explaining examples, and should by no means be construed to limit the present invention in any way.

The disclosure of Japanese Patent Application No. 2016-154019, filed on August 4, 2016, including the specification, drawings and abstract, is incorporated herein by reference in its entirety.

## Claims

1. A user terminal comprising:
a transmission section that transmits a demodulation reference signal for an uplink (UL) data channel; and
a control section that controls transmission of the demodulation reference signal,
wherein, when transmitting the UL data channel in a second transmission time interval (TTI) which is comprised of a smaller number of symbols than a first TTI, the control section maps the demodulation reference signal to a symbol that is selected based on an arrangement pattern of the second TTI.

2. The user terminal according to claim 1, wherein:
the symbol is an unshared symbol that is not shared among a plurality of second TTIs; and
the control section maps the demodulation reference signal to the unshared symbol.

3. The user terminal according to claim 2 wherein, in the arrangement pattern, all second TTIs in the first TTI are placed not to cross a boundary between slots of the first TTI, or at least one second TTI in the first TTI is placed to cross the boundary between the slots.

4. The user terminal according to claim 1, wherein:
the symbol is a shared symbol that is shared among a plurality of second TTIs; and
the control section maps the demodulation reference signal to the shared symbol.

5. The user terminal according to claim 4, wherein, in the arrangement pattern, the shared symbol is shared among a plurality of second TTIs that do not cross a boundary between slots of the first TTI, or is shared among a plurality of second TTIs that cross the boundary between the slots and/or a boundary between a plurality of first TTIs.

6. A radio communication method comprising:
in a user terminal, transmitting a demodulation reference signal for an uplink (UL) data channel; and
in the user terminal, when transmitting the UL data channel in a second transmission time interval (TTI) which is comprised of a smaller number of symbols than a first TTI, mapping the demodulation reference signal to a symbol that is selected based on an arrangement pattern of the second TTI.
